# EUROPEAN PATENT SPECIFICATION

(11) **EP 4 381 221 B1**
(45) Date of publication and mention of the grant of the patent: **09.04.2025**
(21) Application number: 22754430.1
(22) Date of filing: 29.07.2022
(51) Int. Cl.: F17C 1/12

(54) **CONTAINMENT SYSTEM FOR LIQUID HYDROGEN**
BEHÄLTERSYSTEM FÜR FLÜSSIGEN WASSERSTOFF
SYSTÈME DE CONFINEMENT POUR L'HYDROGÈNE LIQUIDE

(30) Priority: 02.08.2021 EP 21189175
(43) Date of publication of application: 12.06.2024
(73) Proprietor: Shell Internationale Research Maatschappij B.V., 2596 HR The Hague (NL)
(72) Inventor: ARUNACHALAM, Arulmani, Bengaluru Hardware Park, KIADB Industrial Park, Mahadeva Kodigehalli, Near Devanahalli Bengaluru 562149 (IN)
(74) Representative: Shell Legal Services IP
(86) International application number: PCT/EP2022/071296
(87) International publication number: WO 2023/012045

(56) References cited:
- EP-A1- 3 199 446
- GB-A- 1 180 274
- KR-A- 20100 022 201
- US-A- 3 136 135
- US-A- 3 267 685
- US-A1- 2017 030 520

## Description

### Field of the invention

The invention relates to a containment system for storing and/or transporting liquid hydrogen. Further, the invention relates to a method of manufacturing such a containment system. The containment system may be used for storage and/or transport of liquid hydrogen, including on-shore and marine applications in the liquid hydrogen supply chain.

### Background to the invention

Hydrogen is an important industrial gas used in oil refining, fertilizer industries and in several other chemical processes. It is expected that hydrogen may additionally play a significant role as energy carrier, in particular in the transportation sector. Hydrogen is further expected to play a role as energy storage medium by using it as an energy buffer to deal with intermittency issues that occur in the electricity grid as a result of using green electricity (e.g. electricity generated using wind or solar power).

Due to the volumetric gains, gaseous hydrogen may suitably be liquefied and then be stored for later use or distribution. Storage of liquified hydrogen may be done in a containment system. The containment system may be an on-shore or an off-shore containment system. Distribution may be done by providing one or more containment systems on a ship/tanker (for marine transportation) or on a truck.

In order to liquefy hydrogen it needs to be cooled down to boiling temperature. For hydrogen at atmospheric pressure, this is approximately minus 253°C. This relatively cold temperature introduces specific requirements for the containment system in order to be suitable for containing liquid hydrogen.

The materials used need to be sufficiently strong at such cryogenic temperatures to hold the liquid hydrogen. Preferably, the containment system does not allow liquid hydrogen to leak out. The containment system is preferably of sufficient structural strength to provide for a safe and reliable storage of liquid hydrogen. When cooling down the containment system (e.g. from ambient) to cryogenic temperatures, thermal cracking due to material shrinkage is to be avoided.

For efficient storage, it is required that the temperature of the liquid hydrogen stored in the cryogenic containment system remains close to the temperature at which it has been loaded. Heat ingress into the containment system will lead to boiling off of liquid hydrogen carried and the gaseous hydrogen generated (Boil Off Gas - BOG) will increase the pressure in the containment system if not removed. Means to manage BOG may include means for re-liquefying BOG, such that it can be re-inserted. Re-liquefaction however requires significant amounts of power and equipment.

It is therefore preferred to reduce heat ingress and thereby BOG by providing a containment system which is well insulated.

Heat ingress may be reduced by forming the walls of the containment system out of several different layers in order to increase the insulation.

US 3 267 685 discloses a container for storing liquids at low temperatures comprising inter alia: a rigid outer shell; thermally insulating material lining said outer shell; a plurality of liquid impermeable membranes lining said thermally insulating material; and a frozen seal structure including a sealant material sealingly engaging portions of the membranes. The sealant material can be water. The storing of liquid hydrogen is not mentioned.

US 2017/0030520 A1 discloses a method of making a wall structure for a container to contain a liquid (such as LNG), the method comprising: pouring a composite fluid into a cavity of a wall structure; and freezing the composite fluid within the cavity to form a composite layer within the wall structure. The composite fluid may include water. The storing of liquid hydrogen is not mentioned. Also, the vacuum enhancing property of cryogenic ice is not mentioned.

KR 2010 0022201 discloses a structure of insulation for LNG carrier cargo.

US 3 136 135 discloses a tanker for the transport of low-temperature liquid cargoes such as LNG, methane, ethane, ethylene and mixtures thereof.

WO2019/122757 describes a tank for storing a liquid, such as liquid hydrogen, wherein use is made of hollow glass microspheres.

Other publications also mention the use of glass bubbles, such as GLASS BUBBLES INSULATION FOR LIQUID HYDROGEN STORAGE TANKS, by J.P. Sass e.a. (2009) (https://www.techapps.com/hs-fs/hub/165629/file-18313642-pdf/documents/technical_paper_glass_bubbles_insulation_for_ liquid_hydrogen_storage_tanks.pdf) and RESEARCH AND DEVELOPMENT HISTORY OF GLASS BUBBLES BULK-FILL THERMAL INSULATION SYSTEMS FOR LARGE-SCALE CRYOGENIC LIQUID HYDROGEN STORAGE TANKS, by J. Fesmire, CryoTestLab, NASA/KSC (09/2017) (https://ntrs.nasa.gov/citations/20180006604).

CN201120842 describes a liquid hydrogen fuel tank. The tank wall is formed by several layers, among which a vacuum thermal insulating layer.

Creating a vacuum layer comes with its own challenges. Creating a high-level vacuum layer between layers of a containment system is a time-consuming process. In the context of large-scale cryogenic containment system, creating a vacuum can take several days. One of the issues is outgassing of the material from the layers facing the vacuum layer. This creates challenges in creation and maintenance of the vacuum for insulation purposes, as even small amounts of gas in the vacuum layer conduct heat.

It is therefore an objective to provide an improved containment system for storing liquid hydrogen.

### Summary of the invention

The present invention provides a containment system (1) for storing liquid hydrogen (3), the containment system (1) comprising one or more walls forming a containment space (2) for holding the liquid hydrogen (3), the containment space (2) containing liquid hydrogen (3),
wherein at least one of the one or more walls comprises an inner barrier layer (11), an outer barrier layer (12) and one or more spacer elements (14) disposed between the inner barrier layer (11) and the outer barrier layer (12) to separate the inner and outer barrier layers (11, 12), thereby creating space for a vacuum layer (13) in between the inner and outer barrier layers (11, 12),
wherein the outer barrier layer (12) is made of cryogenic ice having a temperature of below minus 150°C, and
wherein the vacuum layer (13) has a pressure of below 0.01 Pa.

In this respect it is noted that above-mentioned prior art documents such as US 3 267 685 do not mention the storing of liquid hydrogen and/or do not appreciate the vacuum enhancing property of the cryogenic ice as used for the outer barrier layer according to the present invention.

The advantage of using an outer barrier layer which is made of cryogenic ice (frozen water at a temperature of below minus 150°C) overcomes the problem of outgassing, as the vapor pressure of ice at cryogenic temperatures is very low. This facilitates creation and maintenance of the low pressure in the vacuum layer. The loading and presence of liguid hydrogen will even improve the vacuum. This allows for a very economic way of achieving and maintaining a reliable vacuum in a surprisingly simple manner.

The term vacuum layer is used to refer to a layer with a low pressure, i.e. well below ambient pressure. The pressure in the vacuum layer (P_{vac}) is preferably below 0.01Pa (P_{vac} < 0.01Pa), more preferably below 0.001Pa (P_{vac} < 0.001Pa).

The term ice is used to refer to water (H₂O) frozen into a solid state. The ice may comprise some impurities or bubbles of air, but these are preferably minimized, as such impurities or bubbles of air compromise the insulation.

When the containment system is filled with liquid hydrogen fluid, the temperature of the ice will be relatively low. So, in that case, the ice may also be referred to as cryogenic ice.

The inner and/or outer barrier layers are at least partially made of ice. Parts of the inner and outer barrier layers that are made of ice, may be formed by other materials, for instance for constructional reasons (e.g. the top parts of the inner and outer barrier layers) or specific functional reasons, e.g. to create manholes, venting inlets/outlets, fluid inlets/outlets etc.

The inner and outer barrier layers at least partially made of ice have outer surfaces directly facing the vacuum layer and, optionally, for the inner barrier layer, directly facing the containment space. The term directly facing is used to indicate that the ice is exposed to the vacuum layer or containment space, as appropriate.

Ice has constructional properties at cryogenic temperatures appropriate to support liquid hydrogen, which has a low density. Ice at cryogenic temperatures has a compression strength of more than 5 MPa and a tensile strength of more than 1 MPa. Furthermore, the thermal conductivity of ice at cryogenic temperatures (3.4- 5 W/mK) is appropriate for the effective cool down of the ice barrier before the vacuum space is dried up cryogenically and insulation fillers (Glass Bubbles) be added.

The term 'cryogenic' is used throughout this document to refer to a temperature below minus 150°C, below minus 200°C, or even below minus 250°C.

Preferably, the outer barrier layer 12 is kept at a temperature of below minus 150°C. This has the advantage that the vacuum in the vacuum layer 13 is best maintained, thereby creating effective insulation levels in the vacuum layer 13.

The containment space may have any suitable shape, including cylindrical, with the cylindrical body axis being vertical or horizontal, spherical and cubical. Depending on the shape of the containment space, one or more walls of suitable shape may be provided. For instance, for a cubical shape, four side walls, a bottom wall and a top wall may be provided, while for a spherical tank only one spherical wall or two half-sphere walls positioned on top of each other may be used.

The containment system may comprise one or more venting inlet/outlets (31). The venting inlet/outlets are provided to prevent BOG build up in the containment space and to allow vapour or make up gas in and out of the containment space during off-loading and loading respectively.

The containment system may comprise one or more fluid inlet/outlets (41). The fluid inlet/outlet may be combined but may alternatively be provided by separate fluid inlet(s) and fluid outlet(s).

The fluid inlets are connected or connectable to a liquid supply such as a storage tank or a liquefaction train.

The fluid outlets are connected or connectable to a discharge pump, preferably located outside the containment space. The discharge pump is preferably an eductor system, as such systems create little to none high-frequency vibrations, which are not preferred within or close to the tank piping structure.

The containment system may further comprise one or more vacuum outlets (51), forming a fluid connection between the space for the vacuum layer and the outside of the containment space, the vacuum outlets being connected or connectable to a vacuum pump (not shown) to pump out gas (air) from the vacuum space to create initial vacuum and/or further maintain a vacuum.

The term liquid hydrogen is used to refer to a liquid comprising at least 95 mol% hydrogen. In that context, the term cryogenic is used to refer to a temperature of below minus 250°C (e.g. minus 253°C). The liquid hydrogen may be at or close to ambient pressure.

According to an embodiment there is provided a containment system containing liquid hydrogen wherein the inner barrier layer (11) is made of ice, preferably cryogenic ice having a temperature of below minus 150°C.

The inner barrier layer is on one side facing the vacuum layer, while facing the containment space holding the liquid hydrogen on the other side. As mentioned earlier an inner and outer barrier layer made of ice, which in use will have a low temperature at which the vapor pressure (appropriate to the vacuum insulation filler, e.g. glass bubbles) presents economic and energy efficient advantages over traditional/conventional vacuum containment systems/LIN jacket containment systems for liquid hydrogen.

The better efficiency from this concept also stems from avoiding the high cost of fabrication using hydrogen appropriate metal structures and fabrication methods.

In addition to supporting economical vacuum maintenance, cryogenic ice forms an advantageous liquid barrier layer for liquid hydrogen, in addition to the benefits with respect to creating a vacuum layer and ease in fabrication.

According to the present invention, the outer barrier layer (12) is made of cryogenic ice having a temperature of below minus 150°C.

By having the outer barrier layer facing the vacuum layer cold enough to influence the vapor pressure of ice below 1 Pa the issue of outgassing is greatly reduced, as the outer layer will become sufficiently cold to have a vapor pressure below 1Pa.

According to an embodiment there is provided a containment system wherein both the inner barrier layer (11) and the outer barrier layer (12) are made of cryogenic ice having a temperature of below minus 150°C.

By forming both the inner and the outer barrier layer of cryogenic ice, the vacuum layer will on both sides be faced by a layer formed of cryogenic ice, thereby greatly reducing the issue of outgassing and improving the reliability of vacuum containment.

The inner barrier layer may be at a temperature substantially equal to the temperature of the liquid hydrogen, while the outer barrier layer may be at a temperature higher than the temperature of the liquid hydrogen. The temperature of the inner barrier layer may be approximately minus 253°C, while the temperature of the outer barrier layer may be at approximately minus 173°C. The outer barrier layer is preferably at a temperature which is sufficiently low to minimize outgassing. Preferably, the temperature of the outer layer is above the condensation temperature of N₂ and O₂. Therefore, the outer barrier layer may be covered with one or more further passive insulation layers to keep the outer barrier layer at a relatively low temperature.

According to an embodiment there is provided a containment system wherein the outer barrier layer (12) is on the outside covered by one or more additional insulation layers.

Such insulation layers keep the outer barrier layer at a temperature well below ambient, such that the operating costs of maintaining the outer cryogenic ice wall temperature are optimized. The outer barrier layer may be kept at a temperature of no more than minus 40°C at which the vapor pressure of frozen water is approximately 13 Pa and suitable for glass bubbles vacuum insulation fillers.

It may suffice to maintain the ice of the outer layer at at least minus 40°C or colder (depending on the boil off needed of the tank).

Additional insulation layers may be made from any suitable material, including foamed polystyrene or polyurethane foam (PUF).

According to an embodiment there is provided a containment system wherein the vacuum layer (13) is at least partially filled with an insulation filler.

The insulation filler may be glass bubbles, perlite, multi-layer insulation (MLI) or any other suitable filler.

The use of glass bubbles further improves the insulation of the vacuum layer, without breaking the vacuum conditions.

According to an embodiment there is provided a containment system wherein the containment system (1) comprises heat exchanger tubes (21) thermally connected with the inner and/or outer barrier layers (11, 12) made of ice.

The heat exchanger tubes may for instance be embedded in the inner and/or outer barrier layers.

Heat exchanger tubes may run through the ice layers. A coolant fluid (refrigerant) can be flown through the heat exchanger tubes to provide cooling duty to the ice layers. The ice layers may for instance be kept at a preservation temperature (Tₚᵣₑₛ) during periods wherein the containment system doesn't not comprise liquid hydrogen, including during manufacturing. The preservation temperature may be higher than the hold temperature (T_{hold}) of the ice layers during periods wherein the containment system contains a liquid hydrogen. The heat exchanger tubes may also be used to cool down the ice layers to (or close to) T_{hold} before filing the containment system, to prevent thermal cracking.

The heat exchanger tubes may be part of or may be connectable to a refrigeration cycle, as are known to a skilled person. The refrigeration cycle comprises a compressor, condenser and expander and the heat exchanger tubes form the vaporizer.

According to an embodiment there is provided a containment system wherein the containment system (1) comprises reinforcement means (or reinforcement) embedded in or structurally connected with the inner and/or outer barrier layers (11, 12) made of ice.

By having reinforcement means being provided inside the layers of ice, the constructional strength of those barrier layers is improved. The reinforcement means may be formed by steel rods, and/or the heat exchanger tubes embedded in the inner and/or outer barrier layers. The structural rigidity may be improved with doped ICE. The ice may be doped with shavings/strands of PTFE introduced in the construction stage of inner and/or outer barrier layers.

According to an embodiment there is provided a method of manufacturing a containment system according to the present invention, the method comprising:
a) providing a base floor element (102) having a plurality of spacer elements (14) protruding from the base layer with a protruding distance,
b) forming a first part of the outer barrier layer (12) on the base floor element (102) having a thickness less than the protruding distance, the outer barrier layer having a first outer perimeter,
c) forming a first part of the inner barrier layer (11) being supported by the plurality of spacer elements (14), the inner barrier layer having a second outer perimeter, whereby the second outer perimeter is completely within the first outer perimeter when seen in a direction perpendicular to the plane of the base floor element,
d) completing the inner barrier layer (11) by forming a remainder of the inner barrier layer in connection with the first part of the outer barrier layer (12) along the second outer perimeter, the inner barrier layer (11) forming a containment space (2) for liquid hydrogen (3),
e) completing the outer barrier layer (12) by forming a remainder of the outer barrier layer in connection with the first part of the outer barrier layer along the first outer perimeter,
f) filling the containment space (2) with liquid hydrogen (3),
wherein the outer barrier layer (12) is made of cryogenic ice having a temperature of below minus 150°C.

The method provides an advantageous manner of manufacturing a containment system, as use it made of a base floor element having a plurality of spacer elements. A bottom portion of the outer barrier layer can be formed on top of the base floor element leaving the spacer elements to extend above the bottom portion of the outer barrier layer, allowing forming a bottom portion of the inner barrier layer on top of the spacer elements.

The base floor element may be formed from any suitable material, such as concrete.

The base floor element may have substantially upward pointing wall elements to allow easy formation of the bottom portion of the outer barrier layer.

Formation of the bottom portion of the inner barrier layer may be done in different manners, such as with the use of temporary framework to allow formation and placing of the bottom portion of the inner barrier layer.

The inner barrier layer may be made of ice, the outer barrier layer may be made of cryogenic ice or both the inner barrier layer and the outer barrier layer may be made of cryogenic ice.

According to an embodiment there is provided a method wherein forming those parts of the inner and outer barrier layers made of ice is done by
- manufacturing a plurality of ice units (111),
- applying local heating to predetermined surface areas of an ice unit (111) to be connected to another ice unit (111), thereby melting the outer layer of those predetermined surface areas,
- positioning ice units to be connected to each other against each other, allowing the melted top layer of the surface areas to freeze together, thereby forming the inner and outer barrier layers made of ice

Local heating may be applied by using microwaves or other handheld hot wire elements. This technique by also be referred to as fusion by solidification.

### Brief description of the drawings

Figure 1 schematically shows a side-view of a containment system according to an embodiment.
Figure 2 schematically shows a side-view of a containment system according to a further embodiment.
Fig. 3a schematically shows a base element.
Fig. 3b schematically shows a cross sectional side view of containment system half-way being formed.

### Detailed description

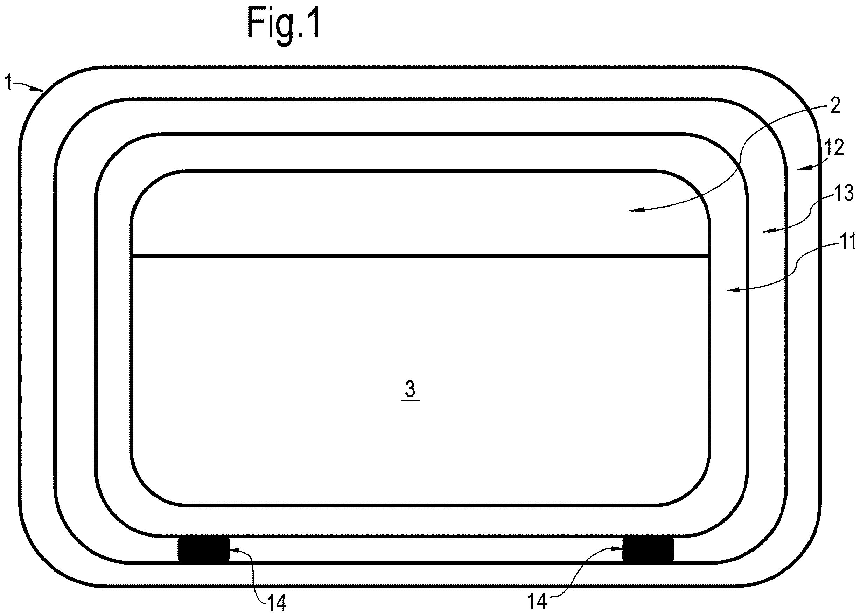

Figure 1 schematically shows a containment system 1, for holding a liquid hydrogen 3, like liquid natural hydrogen, in a containment space 2. The containment system 1 comprises an inner barrier layer 11 and an outer layer 12. The inner layer 11 being the layer that is in direct contact with the liquid hydrogen 3 when present. The inner layer 11 is inside the outer layer 12.

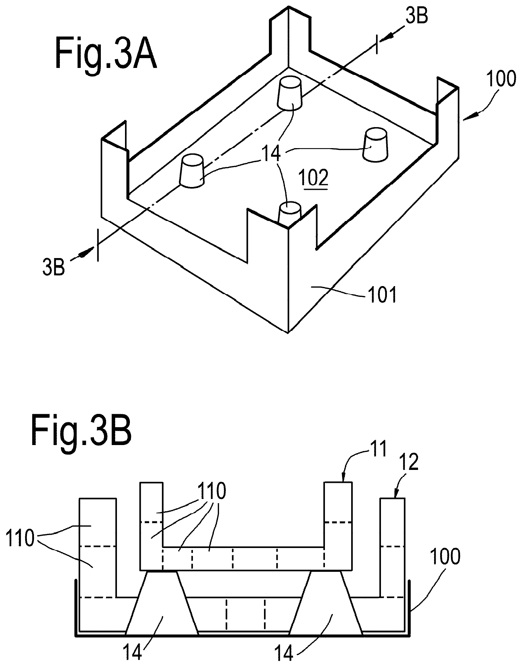

There are spacer elements 14 provided to separate the inner barrier layer 11 from the outer layer 12. According to an alternative embodiment described below with reference to Figs. 3a and 3b, the spacer elements may alternatively protrude through the outer barrier layer 12 to support the inner barrier layer 11.

In between the inner barrier layer 11 and the outer barrier layer 12 a space is created, which forms a vacuum layer 13. One or both of the inner and outer barrier layers 11,12 may be formed of ice. The outer barrier layer is made of cryogenic ice.

The containment system 1 may comprise one or more further insulation layers to further insulate the containment space 2. The containment system 1 may comprise one or more further support layers to further strengthen the containment system 1. These further insulation and support layers are not shown.

The vacuum layer 13 may be filled with an insulation filler, which is also not shown in Fig. 1.

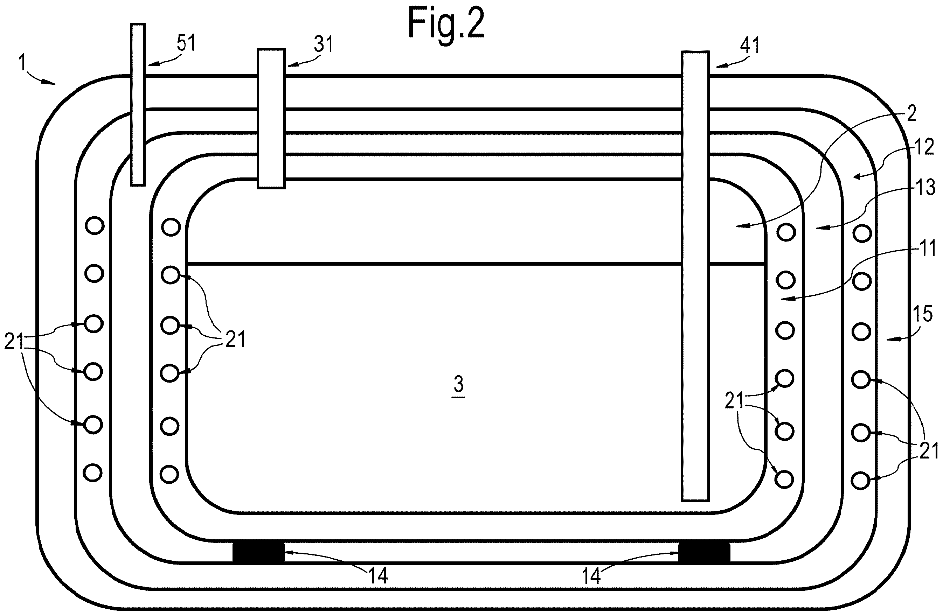

Fig. 2 shows an alternative embodiment, wherein heat exchanger tubes 21 are embedded in the inner and outer barrier layers 11, 12. In this embodiment the inner and outer barrier layers 11, 12 are preferably made of cryogenic ice. The heat exchanger tubes are connected (not shown) to a cooling cycle, such that the heat exchanger tubes 21 can provide cooling duty to the inner and outer barrier layers 11, 12.

Fig. 2 further shows a venting inlet/outlet 31, a fluid inlet/outlet and a vacuum outlet 51.

According to a further embodiment, the containment system comprises reinforcement means to add structural stability to the inner and/or outer barrier layers 11, 12. The reinforcement means may be in the form of an independent structure, e.g. made of steel, which are covered by ice. The reinforcement means may for instance be formed by a skeleton that is inside the inner and/or outer barrier layers 11, 12. The reinforcement means may also be partially provided outside the inner and/or outer barrier layers 11, 12, but are preferably not in contact with the containment space and space for the vacuum layer 13.

Fig. 3a schematically shows a base element 100, comprising a base floor element 102 having a plurality of spacer elements 14 protruding from the base floor element 102. The base element 100 further comprises upright wall elements 101 along the outer perimeter of the base floor element 102 defining the outer perimeter of the outer barrier layer 12.

Fig. 3b schematically shows a cross sectional side view of containment system half-way being formed. A bottom part of the outer barrier layer 12 is formed on the base floor element 102 and uprights walls of the outer barrier layer 12 are formed against the wall elements 101.

A bottom part of the inner barrier layer 11 is formed and is supported by the spacer elements 14.

The embodiment depicted in Figs. 3A and 3B has both the inner and outer barrier layer 11, 12 formed of cryogenic ice, but it is understood as explained above that also just one of the inner and outer barrier layer 11, 12 may be formed of (cryogenic) ice.

## Claims

1. A containment system (1) for storing liquid hydrogen (3), the containment system (1) comprising one or more walls forming a containment space (2) for holding the liquid hydrogen (3), the containment space (2) containing liquid hydrogen (3),
wherein at least one of the one or more walls comprises an inner barrier layer (11), an outer barrier layer (12) and one or more spacer elements (14) disposed between the inner barrier layer (11) and the outer barrier layer (12) to separate the inner and outer barrier layers (11, 12), thereby creating space for a vacuum layer (13) in between the inner and outer barrier layers (11, 12),
**characterized in that**
the outer barrier layer (12) is made of cryogenic ice having a temperature of below minus 150°C, and
**in that** the vacuum layer (13) has a pressure of below 0.01 Pa.

2. Containment system (1) according to any one of the preceding claims, wherein the inner barrier layer (11) is made of ice, preferably cryogenic ice having a temperature of below minus 150°C.

3. Containment system (1) according to claim 1 or 2, wherein the outer barrier layer (12) is on the outside covered by one or more additional insulation layers.

4. Containment system (1) according to any one of the preceding claims, wherein the vacuum layer (13) is at least partially filled with an insulation filler.

5. Containment system (1) according to any one of the preceding claims, wherein the containment system (1) comprises heat exchanger tubes (21) embedded in the inner and/or outer barrier layers (11, 12).

6. Containment system (1) according to any one of the preceding claims, wherein the containment system (1) comprises reinforcement means embedded in or structurally connected with the inner and/or outer barrier layers (11, 12).

7. Method of manufacturing a containment system according to any one of the claims 1-6, the method comprising:
a) providing a base floor element (102) having a plurality of spacer elements (14) protruding from the base layer with a protruding distance,
b) forming a first part of the outer barrier layer (12) on the base floor element (102) having a thickness less than the protruding distance, the outer barrier layer having a first outer perimeter,
c) forming a first part of the inner barrier layer (11) being supported by the plurality of spacer elements (14), the inner barrier layer having a second outer perimeter, whereby the second outer perimeter is completely within the first outer perimeter when seen in a direction perpendicular to the plane of the base floor element,
d) completing the inner barrier layer (11) by forming a remainder of the inner barrier layer in connection with the first part of the outer barrier layer (12) along the second outer perimeter, the inner barrier layer (11) forming a containment space (2) for liquid hydrogen (3),
e) completing the outer barrier layer (12) by forming a remainder of the outer barrier layer in connection with the first part of the outer barrier layer along the first outer perimeter,
f) filling the containment space (2) with liquid hydrogen (3),
wherein the outer barrier layer (12) is made of cryogenic ice having a temperature of below minus 150°C.

8. Method according to claim 7, wherein forming those parts of the inner and outer barrier layers made of ice is done by
• manufacturing a plurality of ice units (111),
• applying local heating to predetermined surface areas of an ice unit (111) to be connected to another ice unit (111), thereby melting the top layer of those surface areas,
• positioning ice units to be connected to each other against each other, allowing the melted top layer of the surface areas to freeze together, thereby forming the inner and outer barrier layers made of ice.

## Patentansprüche

1. Rückhaltesystem (1) zum Speichern von flüssigem Wasserstoff (3), das Rückhaltesystem (1) umfassend eine oder mehrere Wände, die einen Rückhalteraum (2) zum Halten des flüssigen Wasserstoffs (3) ausbilden, wobei der Rückhalteraum (2) flüssigen Wasserstoff (3) enthält,
wobei mindestens eine der einen oder der mehreren Wände eine innere Sperrschicht (11), eine äußere Sperrschicht (12) und ein oder mehrere Abstandselemente (14) umfasst, die zwischen der inneren Sperrschicht (11) und der äußeren Sperrschicht (12) angeordnet sind, um die innere und die äußere Sperrschicht (11, 12) zu trennen, wodurch zwischen der inneren und der äußeren Sperrschicht (11, 12) Raum für eine Vakuumschicht (13) geschaffen wird,
**dadurch gekennzeichnet, dass**
die äußere Sperrschicht (12) aus kryogenem Eis hergestellt ist, das eine Temperatur von unter minus 150 °C aufweist, und
**dass** die Vakuumschicht (13) einen Druck von unter 0,01 Pa aufweist.

2. Rückhaltesystem (1) nach einem der vorstehenden Ansprüche, wobei die innere Sperrschicht (11) aus Eis hergestellt ist, vorzugsweise kryogenem Eis, das eine Temperatur von unter minus 150 °C aufweist.

3. Rückhaltesystem (1) nach Anspruch 1 oder 2, wobei die äußere Sperrschicht (12) außenseitig durch eine oder mehrere zusätzliche Isolationsschichten abgedeckt ist.

4. Rückhaltesystem (1) nach einem der vorstehenden Ansprüche, wobei die Vakuumschicht (13) mindestens teilweise mit einem Isolationsfüllstoff gefüllt ist.

5. Rückhaltesystem (1) nach einem der vorstehenden Ansprüche, wobei das Rückhaltesystem (1) Wärmetauscherrohre (21) umfasst, die in die innere und/oder äußere Sperrschicht (11, 12) eingebettet sind.

6. Rückhaltesystem (1) nach einem der vorstehenden Ansprüche, wobei das Rückhaltesystem (1) Verstärkungsmittel umfasst, die in die innere und/oder äußere Sperrschicht (11, 12) eingebettet oder mit diesen strukturell verbunden sind.

7. Verfahren zum Fertigen eines Rückhaltesystems nach einem der Ansprüche 1 bis 6, das Verfahren umfassend:
a) Bereitstellen eines Basisbodenelements (102), das eine Vielzahl von Abstandselementen (14) aufweist, die mit einem vorstehenden Abstand von der Basisschicht vorstehen,
b) Ausbilden eines ersten Teils der äußeren Sperrschicht (12) auf dem Basisbodenelement (102), das eine Dicke aufweist, die geringer als der vorstehende Abstand ist, wobei die äußere Sperrschicht einen ersten Außenumfang aufweist,
C) Ausbilden eines ersten Teils der inneren Sperrschicht (11), der durch die Vielzahl von Abstandselementen (14) gestützt wird, wobei die innere Sperrschicht einen zweiten Außenumfang aufweist, wobei der zweite Außenumfang, gesehen in einer Richtung senkrecht zu der Ebene des Basisbodenelements, vollständig innerhalb des ersten Außenumfangs liegt,
d) Vervollständigen der inneren Sperrschicht (11) durch das Ausbilden eines Restes der inneren Sperrschicht in Verbindung mit dem ersten Teil der äußeren Sperrschicht (12) entlang des zweiten Außenumfangs, wobei die innere Sperrschicht (11) einen Rückhalteraum (2) für flüssigen Wasserstoff (3) ausbildet,
e) Vervollständigen der äußeren Sperrschicht (12) durch das Ausbilden eines Restes der äußeren Sperrschicht in Verbindung mit dem ersten Teil der äußeren Sperrschicht entlang des ersten Außenumfangs,
f) Füllen des Rückhalteraums (2) mit flüssigem Wasserstoff (3),
wobei die äußere Sperrschicht (12) aus kryogenem Eis hergestellt ist, das eine Temperatur von unter minus 150 °C aufweist.

8. Verfahren nach Anspruch 7, wobei das Ausbilden der Teile der inneren und der äußeren Sperrschicht, die aus Eis hergestellt sind, erfolgt durch
• Fertigen einer Vielzahl von Eiseinheiten (111),
• Anwenden lokaler Erwärmung auf zuvor bestimmte Oberflächenbereiche einer Eiseinheit (111), die mit einer anderen Eiseinheit (111) verbunden werden soll, wodurch die obere Schicht dieser Oberflächenbereiche schmilzt,
• Positionieren von Eiseinheiten, die miteinander verbunden werden sollen, gegeneinander, wobei ermöglicht wird, dass die geschmolzene obere Schicht der Oberflächenbereiche zusammenfriert, wodurch die innere und die äußere Sperrschicht ausgebildet wird, die aus Eis hergestellt ist.

## Revendications

1. Système de confinement (1) destiné à stocker de **l'hydrogène liquide** (3), le système de confinement (1) comprenant une ou plusieurs parois formant un espace de confinement (2) pour contenir **l'hydrogène** liquide **(3), l'espace de confinement** (2) **contenant de l'hydrogène liquide** (3),
dans lequel au moins une de la ou des parois comprend une couche barrière interne (11), une couche barrière externe (12) et un ou plusieurs éléments **d'espacement** (14) disposés entre la couche barrière interne (11) et la couche barrière externe (12) pour séparer les couches barrières interne et externe (11, 12), créant de ce fait un espace pour une couche de vide (13) entre les couches barrières interne et externe (11, 12),
**caractérisé en ce que**
la couche barrière externe (12) est constituée de glace cryogénique ayant une température inférieure à moins 150 °C, et
**en ce que** la couche de vide (13) a une pression inférieure à 0,01 Pa.

2. Système de confinement (1) **selon l'une quelconque** des revendications précédentes, dans lequel la couche barrière interne (11) est constituée de glace, de préférence de glace cryogénique ayant une température inférieure à moins 150 °C.

3. Système de confinement (1) selon la revendication 1 ou 2, dans lequel la couche barrière externe (12) **est sur l'extérieur recouverte par une** ou plusieurs couches isolantes supplémentaires.

4. Système de confinement (1) **selon l'une quelconque** des revendications précédentes, dans lequel la couche de vide (13) **est au moins partiellement remplie d'une** charge isolante.

5. Système de confinement (1) **selon l'une quelconque** des revendications précédentes, dans lequel le système de confinement (1) comprend des tubes échangeurs de chaleur (21) encastrés dans les couches barrières interne et/ou externe (11, 12).

6. Système de confinement (1) **selon l'une quelconque** des revendications précédentes, dans lequel le système de confinement (1) comprend des moyens de renforcement encastrés dans ou reliés structurellement aux couches barrières interne et/ou externe (11, 12).

7. **Procédé de fabrication d'un système de confinement selon l'une** quelconque des revendications 1 à 6, le procédé comprenant :
a) la fourniture d'un élément de plancher de base (102) **comportant une pluralité d'éléments d'espacement** (14) dépassant de la couche de base avec une distance de dépassement,
b) **la formation d'une première partie de la couche** barrière externe (12) **sur l'élément de plancher de** base (102) ayant une épaisseur inférieure à la distance de dépassement, la couche barrière externe ayant un premier périmètre externe,
c) **la formation d'une première partie de la couche** barrière interne (11) supportée par la pluralité **d'éléments d'espacement** (14), la couche barrière interne ayant un second périmètre externe, moyennant quoi le second périmètre externe est entièrement à **l'intérieur du premier périmètre externe lorsqu'**il est observé dans une direction perpendiculaire au plan de **l'élément de plancher de base,**
d) **l'achèvement de la couche barrière** interne (11) en formant un reste de la couche barrière interne en liaison avec la première partie de la couche barrière externe (12) le long du second périmètre externe, la couche barrière interne (11) formant un espace de confinement **(2) pour l'hydrogène liquide** (3),
**e) l'achèvement de la couche barrière externe** (12) en formant un reste de la couche barrière externe en liaison avec la première partie de la couche barrière externe le long du premier périmètre externe,
**f) le remplissage de** l'**espace de confinement** (2) avec **de l'hydrogène liquide** (3),
dans lequel la couche barrière externe (12) est constituée de glace cryogénique ayant une température inférieure à moins 150 °C.

8. Procédé selon la revendication 7, dans lequel la formation des parties des couches barrières interne et externe qui sont constituées de glace s'effectue par
• **la fabrication d'une pluralité d'unités de** glace (111),
• **l'application d'un chauffage local à des surfaces prédéterminées d'une unité de glace** (111) devant être reliée à une autre unité de glace (111), faisant de ce fait fondre la couche supérieure de ces surfaces,
• **le positionnement d'unités de glace à relier les** unes aux autres, ce qui permet à la couche supérieure fondue des surfaces de geler ensemble, formant de ce fait les couches barrières interne et externe de glace.
